(19) Europäisches Patentamt

European Patent Office

Office européen des brevets

(11) **EP 1 506 262 B1**

(12) **EUROPÄISCHE PATENTSCHRIFT**

(45) Veröffentlichungstag und Bekanntmachung des Hinweises auf die Patenterteilung:
**15.03.2006 Patentblatt 2006/11**

(51) Int Cl.:
**C09C 1/00** (2006.01)

(21) Anmeldenummer: **03717329.1**

(22) Anmeldetag: **08.05.2003**

(86) Internationale Anmeldenummer:
**PCT/EP2003/004798**

(87) Internationale Veröffentlichungsnummer:
**WO 2003/095564 (20.11.2003 Gazette 2003/47)**

(54) **GONIOCHROMATISCHE GLANZPIGMENTE**

GONIOCHROMATIC BRIGHT PIGMENTS

PIGMENTS BRILLANTS GONIOCHROMATIQUES

(84) Benannte Vertragsstaaten:
**AT BE BG CH CY CZ DE DK EE ES FI FR GB GR HU IE IT LI LU MC NL PT RO SE SI SK TR**

(30) Priorität: **14.05.2002 DE 10221497**

(43) Veröffentlichungstag der Anmeldung:
**16.02.2005 Patentblatt 2005/07**

(73) Patentinhaber: **BASF Aktiengesellschaft**
**67056 Ludwigshafen (DE)**

(72) Erfinder:
• **SEEGER, Oliver**
**68165 Mannheim (DE)**
• **MRONGA, Norbert**
**69221 Dossenheim (DE)**
• **HENNING, Rainer**
**67251 Freinsheim (DE)**
• **SCHMID, Raimund**
**67435 Neustadt (DE)**

(56) Entgegenhaltungen:
**EP-A- 0 254 861    EP-A- 0 832 943**
**WO-A-98/38253    WO-A-99/57204**
**US-A- 5 234 496**

**Beschreibung**

Die vorliegende Erfindung betrifft goniochromatische'Glanzpigmente, die mindestens eine dielektrische, niedrigbrechende, Interferenzfarben zeigende Schicht aufweisen, in die ein polares organisches Lösungsmittel eingelagert ist, das über funktionelle Gruppen mit dem Schichtmaterial wechselwirken kann.

Außerdem betrifft die Erfindung ein Verfahren zur Herstellung dieser Glanzpigmente sowie ihre Verwendung zum Einfärben von Lacken, Druckfarben, Tinten, Kunststoffen, Gläsern, keramischen Produkten und Zubereitungen der dekorativen Kosmetik.

Glanz- oder Effektpigmente werden in vielen Bereichen der Technik eingesetzt, beispielsweise in Automobillacken, in dekorativen Beschichtungen, in der Kunststoffeinfärbung, in Anstrichfarben, Druckfarben, insbesondere Sicherheitsdruckfarben, sowie in der Kosmetik.

Ihre optische Wirkung beruht auf der gerichteten Reflexion von Licht an überwiegend flächig ausgebildeten, zueinander parallel ausgerichteten, metallischen oder stark lichtbrechenden Pigmentteilchen. Je nach der Zusammensetzung der Pigmentplättchen erzeugen Interferenz-, Reflexions- und Absorptionsphänomene winkelabhängige Farb- und Helligkeitseindrücke.

Von besonderem Interesse sind goniochromatische Glanzpigmente, die einen winkelabhängigen Farbwechsel zwischen mehreren intensiven Interferenzfarben und damit ein attraktives Farbenspiel zeigen.

Die Mehrzahl der bekannten goniochromatischen Glanzpigmente weist einen lichtreflektierenden, metallischen oder für sichtbares Licht zumindest teilweise durchlässigen, nichtmetallischen, plättchenförmigen Kern auf, der im Wechsel mit niedrigbrechenden und hochbrechenden bzw. reflektierenden Schichten belegt ist. Dieser Pigmenttyp ist z.B. in den EP-A-668 329, WO-A-96/34917, EP-A-708 154, EP-A-753 545, EP-A-940 451, EP-A-959 109, DE-A-197 46 067 und US-A-5 135 812 beschrieben.

Daneben sind aus der WO-A-93/08237 goniochromatische Glanzpigmente auf Basis von Siliciumdioxidplättchen bekannt, die mit einer Schicht aus hochbrechenden Metalloxiden belegt sind.

Alle kommerziell erhältlichen goniochromatischen Glanzpigmente weisen mindestens eine dielektrische, niedrigbrechende, insbesondere aus Siliciumdioxid oder Magnesiumfluorid bestehende Schicht auf, die für den winkelabhängigen Farbeindruck der Pigmente verantwortlich ist und deren zarte Interferenzfarben durch die Kombination mit reflektierenden (hochbrechenden oder stark absorbierenden) Schichten verstärkt werden.

Diese Glanzpigmente neigen dazu, bis zur Sättigung Wasser/Feuchtigkeit aus der Luft/Umgebung aufzunehmen, das/die insbesondere in die den Hauptbestandteil der Beschichtung bzw. des optischen Systems bildende, dielektrische, niedrigbrechende Schicht eingelagert wird. Abhängig vom Wassergehalt ändert sich auch die Koloristik der Glanzpigmente. Werden die Glanzpigmente bei der Anwendung einer thermischen Behandlung unterzogen, was z.B. bei der Automobillackierung mit Einbrennlacken der Fall ist, so zeigen sie nach dem Einbrennen aufgrund des Wasserentzugs eine unerwünschte Änderung der Koloristik, konstante koloristische Eigenschaften'werden erst nach einigen Stunden oder Tagen durch erneute Wasseraufnahme aus der Umgebung erreicht. Die Qualitätskontrolle bei einer Automobilserienlackierung wird hierdurch erheblich erschwert.

Es ist aus den EP-A-634 459, DE-A-197 08 167, EP-A-832 943 und WO-A-99/57204 bekannt, Glanzpigmente mit Silanen zu beschichten, um deren Ausrichtung und Dispergierung im Anwendungsmedium bzw. deren Schwitzwasserbeständigkeit zu verbessern.

US5234496A offenbart goniochromatische Glanzpigmente die mit Alkylglykolethern beschichtet sind.

WO9838253 A offenbart Pigmentpräparationen, bei denen u.a. auch Perglanzpigmente oder auch metalleffekt Pigmente, bestehend aus Metalloxid beschichteten Aluminiumplättchen, mit einem organischen Lösungsmittel versetzt und bei 80°C bis 150°C homogenisiert werden.

Sowohl US5234496 A, als auch WO9838253 beschreiben keine goniochromatischen Glanzpigmente, die eine niedrigbrechende, dielektrische Schicht aufweisen, in die ein polares organisches Lösungsmittel eingelagert ist.

Der Erfindung lag die Aufgabe zugrunde, goniochromatische Glanzpigmente bereitzustellen, deren koloristische Eigenschaften sich bei der Anwendung in Einbrennlacken weniger ändern und schneller stabilisieren.

Demgemäß wurden goniochromatische Glanzpigmente gefunden, die mindestens eine dielektrische, niedrigbrechende, Interferenzfarben zeigende Schicht aufweisen, in die ein polares organisches Lösungsmittel eingelagert ist, das über Hydroxyl- oder Amidgruppen mit dem Schichtmaterial wechselwirken kann.

Außerdem wurden bevorzugte goniochromatische Glanzpigmente gefunden, die zusätzlich mit einem Silan behandelt worden sind.

Weiterhin wurde ein Verfahren zur Herstellung dieser Glanzpigmente gefunden, welches dadurch gekennzeichnet ist, daß man die Pigmentteilchen in dem organischen Lösungsmittel auf eine. Temperatur ≥ 100°C erhitzt.

Schließlich wurde die Verwendung dieser Glanzpigmente zur Einfärbung von Lacken, Druckfarben, Tinten, Kunststoffen, Gläsern, keramischen Produkten und Zubereitungen der dekorativen Kosmetik gefunden.

Die erfindungsgemäßen goniochromatischen Glanzpigmente weisen mindestens eine dielektrische, niedrigbrechende, Interferenzfarben zeigende Schicht auf. Diese Schicht kann als Beschichtung auf ein Substratplättchen aufgebracht sein oder selbst den Kern der Glanzpigmente bilden.

In der Regel beträgt der Brechungsindex n dieser Schicht < 2, bevorzugt ≤ 1,8, besonders bevorzugt ≤ 1,6.

Als Schichtmaterial sind vor allem niedrigbrechende Metalloxide, Metalloxidhydrate und Metallfluoride, wie Siliciumdioxid, Siliciumoxidhydrat, Aluminiumoxid, Aluminiumoxidhydrat und Magnesiumfluorid, geeignet.

Typischerweise liegen die geometrische Schichtdicken der niedrigbrechenden Schicht bei 80 bis 800 nm, insbesondere bei 150 bis 500 nm.

Hinsichtlich des weiteren Aufbaus sind die erfindungsgemäßen goniochromatischen Glanzpigmente in keiner Weise eingeschränkt, alle bekannten Pigmenttypen sind geeignet.

Die erfindungsgemäßen Glanzpigmente können dementsprechend beispielsweise auf einfach mit hochbrechendem Material beschichteten, niedrigbrechenden Substratplättchen, z.B. mit Metalloxiden, wie Titandioxid oder Eisen(III)oxid, beschichteten Siliciumdioxidplättchen, basieren oder mehrschichtig aufgebaut sein, wobei dieses Substratmaterial alternierend mit niedrigbrechenden und hochbrechenden bzw. reflektierenden Schichten belegt ist.

Die mehrschichtig aufgebauten Glanzpigmente können durch aufeinanderfolgendes Aufdampfen der gewünschten Schichtmaterialien im Hochvakuum.auf eine Trägerfolie (Physical Vapor Deposition), anschließendes Entfernen der Trägerfolie von dem mehrschichtigen Film und dessen Zerkleinerung auf Pigmentteilchengröße hergestellt werden. Üblicherweise bestehen diese Glanzpigmente aus einer zentralen reflektierenden Schicht insbesondere aus Metall, z.B. Aluminium, die an der Ober- und Unterseite zunächst mit niedrigbrechendem Material, z.B. Magnesiumfluorid, und dann mit Metall, z.B. Chrom, beschichtet ist.

Bevorzugt basieren die erfindungsgemäßen goniochromatischen Glanzpigmente jedoch auf plättchenförmigen Substratteilchen, die mehrfach, insbesondere naßchemisch oder durch Gasphasenzersetzung (Chemical Vapor Deposition), beschichtet werden.

Als Substratmaterial eignen sich dabei alle plättchenförmigen Materialien, die senkrecht auftreffendes Licht ganz oder teilweise (üblicherweise zu mindestens 10%) reflektieren. In der Regel sind diese Materialien hochbrechend und haben üblicherweise einen Brechungsindex von in der Regel ≥ 2, vorzugsweise ≥ 2,4, sie können opak, semiopak oder transparent und in Reflexion bzw. Transmission auch farbig sein.

Eine Gruppe geeigneter Substratmaterialien sind Metallplättchen. Es kommen alle für Metalleffektpigmente bekannten Metalle und Legierungen, z.B. Stahl, Kupfer und seine Legierungen wie Messing und Bronzen und insbesondere Aluminium und seine Legierungen wie Aluminiumbronze, in Betracht. Bevorzugt sind Aluminiumflakes, die in einfacher Weise durch Herausstanzen aus Aluminiumfolie oder nach gängigen Verdüsungs- und Mahltechniken herzustellen sind, wobei handelsübliche Produkte eingesetzt werden können, deren Oberfläche jedoch weitgehend frei von Fetten oder ähnlichen Belegmitteln sein sollte und passiviert, d.h. insbesondere gegenüber Wasser stabilisiert, sein kann.

Die metallischen Substratteilchen können gewünschtenfalls bereits mit hochbrechenden Metallverbindungen, wie hochbrechendem Metalloxid, Metallnitrid oder Metallsulfid, insbesondere z.B. Eisen- oder Titanoxid, belegt sein und daher durch Interferenzeffekte und gegebenenfalls Absorption bereits eine (schwache) Eigenfarbe besitzen. Diese Beschichtung sollte jedoch nicht zu dick.sein (etwa 5 bis 150 nm), damit die Substratteilchen ihre metallische Koloristik behalten. Weiterhin können die metallischen Substratteilchen auch mit magnetischen Materialien wie Eisen, Kobalt, Nickel oder γ-Eisen(III)oxid belegt und damit magnetisierbar sein.

Eine weitere Gruppe geeigneter Substratmaterialien sind nichtmetallische Plättchen, die "von sich aus" hochbrechend sind oder die "von sich aus" nur niedrigbrechend und deshalb mit einer hochbrechenden Beschichtung versehen sind.

Beispiele für besonders geeignete von sich aus hochbrechende Materialien sind selektiv oder nichtselektiv absorbierende Materialien, z.B. plättchenförmige Metalloxide, -sulfide und -nitride, wie vor allem plättchenförmiges (semiopakes) α-Eisen(III)-oxid (α-Fe$_2$O$_3$, Hämatit), das mit Silicium, Aluminium oder Aluminium und Mangan dotiert sein kann, plättchenförmiges (opakes) Eisen(II/III)oxid (Fe$_3$O$_4$, Magnetit), Molybdänsulfid-, Bornitrid- und Graphitplättchen. Ebenfalls geeignet sind nichtabsorbierende (farblose), transparente Materialien wie plättchenförmiges Bismutoxychlorid, Titandioxid- und Zirkondioxidplättchen.

Beispiele für besonders geeignete von sich aus nur niedrigbrechende Materialien sind vor allem silikatische Plättchen, wie insbesondere helle bzw. weiße Glimmer, vorzugsweise naß vermahlener Muskovit, aber auch andere natürliche Glimmer, z.B. Phlogopit und Biotit, künstliche Glimmer, Talk- und Glasschuppen.

Als hochbrechende Beschichtung für diese niedrigbrechenden Materialien eignen sich insbesondere hochbrechende Metalloxide, Metallnitride und Metallsulfide wie Titan-, Zirkon-, Zink- und Zinnoxid, Bismutoxychlorid, Eisenoxide, Chromoxid und Ilmenit sowie reduzierte, Titan mit Oxidationszahlen von < 4 bis 2 enthaltende Titanverbindungen, wie Ti$_3$O$_5$, Ti$_2$O$_3$, TiO, Titanoxynitride und TiN, die bei Reduktion titandioxidbeschichteter Substrate mit Ammoniak, Wasserstoff und/oder Kohlenwasserstoffen entstehen. Bevorzugt sind hierbei neben Ilmenit insbesondere Titandioxid und seine Reduktionsprodukte sowie Eisen(III) oxid.

Übliche geometrische Schichtdicken für diese hochbrechenden Beschichtungen liegen im Bereich von etwa 10 bis 300 nm, insbesondere von 20 bis 200 nm.

In der Regel haben die Substratplättchen mittlere größte Durchmesser von etwa 1 bis 200 μm, insbesondere

5 bis 100 $\mu$m, und Dicken von etwa 0,1 bis 1 $\mu$m, insbesondere um etwa 0,5 $\mu$m bei metallischen und um etwa 0,3 $\mu$m bei nichtmetallischen Substraten. Ihre spezifische freie Oberfläche (BET) beträgt üblicherweise 1 bis 15 $m^2$/g, insbesondere 0,1 bis 5 $m^2$/g bei metallischen und 1 bis 12 $m^2$/g bei nichtmetallischen Substraten.

Typischerweise werden diese Substratplättchen zunächst mit der dielektrischen, niedrigbrechenden Schicht, die farblos sein oder sichtbares Licht selektiv absorbieren kann, und dann mit einer reflektierenden, für sichtbares Licht zumindest teilweise durchlässigen Schicht belegt. Selbstverständlich ist eine Belegung mit mehreren gleichen oder verschiedenen derartigen Schichtpaketen möglich, bevorzugt ist aber die Belegung mit nur einem Schichtpaket.

Übliche Materialien für die niedrigbrechende Schicht sind auch hier z.B. Metalloxide und Metalloxidhydrate, wie Siliciumoxid, Siliciumoxidhydrat, Aluminiumoxid, Aluminiumoxidhydrat, Aluminiumhydroxid und deren Mischungen, wobei Siliciumoxid(hydrat) bevorzugt ist. Durch den Einbau von Farbmitteln in diese Oxidschichten können auch selektiv absorbierende Beschichtungen erhalten werden.

Für die das optische System vervollständigende reflektierende Schicht eignen sich eine Fülle von Materialien, die sowohl hochbrechend sein und sichtbares Licht nicht absorbieren, selektiv absorbieren oder nichtselektiv absorbieren können als auch niedrigbrechend sein können, dann jedoch im sichtbaren Wellenlängenbereich eine hohe Absorptionskonstante (in der Regel $\geq 4$) aufweisen.

Im einzelnen seien folgende Beispiele für besonders geeignete hochbrechende Materialien genannt:

- nichtabsorbierende Materialien:

     Metalloxide, wie Titandioxid, Titanoxidhydrat, Zirkoniumdioxid, Zirkoniumoxidhydrat, Zinndioxid, Zinnoxidhydrat, Zinkoxid, Zinkoxidhydrat und deren Mischungen, wobei Titandioxid und Titanoxidhydrat und deren Mischungen mit bis zu etwa 5 Gew.-% der anderen Metalloxide, insbesondere Zinndioxid, aber auch Siliciumdioxid, bevorzugt sind; Bismutoxychlorid; Metallsulfide wie Zinksulfid;

- selektiv absorbierende Materialien:

     Metalloxide und -nitride, wie besonders bevorzugt Eisen(III)-oxide ($\alpha$- und $\gamma$-$Fe_2O_3$), Chrom(III)oxid, Titan(III)oxid und Titannitride (TiN und Titanoxynitride $TiO_xN_y$), wobei die niederen Titanoxide und -nitride in der Regel im Gemisch mit Titandioxid vorliegen, auch Bismutvanadat und Molybdänsuboxide (Molybdänblau) sowie mit selektiv absorbierenden Farbmitteln "eingefärbte" farblose Metalloxidschichten, z.B. aus Titandioxid und Zirkondioxid, die mit selektiv absorbierenden Metallkationen dotiert oder mit einem Farbmittel enthaltenden Film überzogen sind;

- nichtselektiv absorbierende Materialien:

     Metalle, die durch Gasphasenzersetzung flüchtiger Metallverbindungen abgeschieden werden können, wie besonders bevorzugt Molybdän, bevorzugt Eisen, Wolfram und Chrom, auch Cobalt und Nickel sowie Gemische dieser Metalle, sowie Metalle, die naßchemisch durch Reduktion aus Metallsalzlösungen abgeschieden werden können, wie Silber, Kupfer, Gold, Palladium, Platin und Legierungen, z.B. NiP, NiB, NiCo, NiWP, CoP und AgAu; Metalloxide wie bevorzugt Magnetit ($Fe_3O_4$), auch Cobaltoxid (CoO, $Co_3O_4$) und Vanadiumoxid ($VO_2$, $V_2O_3$) sowie auch Mischungen dieser Oxide mit den Metallen, z.B. Magnetit/Eisen; Metallsulfide wie besonders bevorzugt Molybdänsulfid, bevorzugt Eisensulfid, Wolframsulfid und Chromsulfid, auch Cobaltsulfid und Nickelsulfid sowie Gemische dieser Sulfide wie $MoS_2$/$WS_2$ und vor allem auch Gemische dieser Sulfide mit dem jeweiligen Metall, z.B. $MoS_2$/Molybdän, und Gemische mit Oxiden des jeweiligen Metalls, z.B. $MoS_2$/Molybdänoxide; Kohlenstoff.

Als Beispiel für niedrigbrechende, jedoch stark absorbierende Materialien seien Metalle, wie Aluminium, genannt.

Die geometrische Schichtdicke dieser Beschichtung variiert in Abhängigkeit von den optischen Eigenschaften des ausgewählten Schichtmaterials und kann 1 bis etwa 500 nm betragen. Bevorzugte geometrischen Schichtdicken betragen bei hochbrechenden, nicht absorbierenden Materialien 5 bis 50 nm, insbesondere 10 bis 40 nm, und bei hochbrechenden, selektiv absorbierenden Materialien 1 bis 500 nm, insbesondere 10 bis 150 nm. Für hochbrechende, nichtselektiv absorbierende Materialien liegt die geometrische Schichtdicke vorzugsweise im Bereich von 1 bis 100 nm, wobei für stark absorbierende Metalle, wie Molybdän und Chrom, Schichtdicken von 1 bis 25 nm, für schwächer absorbierende Materialien, wie Magnetit, Schichtdicken von 10 bis 50 nm und für metallsulfidhaltige Materialien, wie $MoS_2$-enthaltende Schichten, Schichtdicken von 5 bis 20 nm besonders bevorzugt sind. Bei niedrigbrechenden, stark absorbierenden Materialien beträgt die geometrische Schichtdicke schließlich bevorzugt 1 bis 25 nm, besonders bevorzugt 5 bis 20 nm.

Goniochromatische Glanzpigmente sind unter dem Namen Variocrom® (BASF), (Colorstream®, Merck) und Chromaflair® (Flex Products) im Handel erhältlich.

In die niedrigbrechende Schicht der erfindungsgemäßen goniochromatischen Glanzpigmente ist ein polares organisches Lösungsmittel eingelagert, dessen Moleküle klein genug sind, um in das molekulare Gitter dieser Schicht zu passen, und das funktionelle Gruppen enthält, die mit dem Molekülgitter wechselwirken und das Lösungsmittel so dauerhaft im Gitter fixieren können.

Dieses Lösungsmittel ist deshalb in der Lage, die bereits in diese Schicht eingebauten Wassermoleküle weitgehend zu verdrängen und einen erneuten Einbau von Wassermolekülen in diese Schicht weitgehend zu verhindern. Dadurch wird die Schichtdicke dieser Schicht und damit auch ihre Koloristik im wesentlichen konstant gehalten.

Das Molekülvolumen dieses Lösungsmittels beträgt dementsprechend in der Regel 60 bis 500 $\text{Å}^3$.

Die funktionelle Gruppen sind Hydroxylgruppen und Amidgruppen. Hydroxylgruppen sind dabei bevorzugt und fixieren die Lösungsmittelmoleküle unter Veretherung in einem $SiO_2$-Gitter. Amidgruppen müssen dabei zunächst verseift werden und binden die Lösungsmittelmoleküle dann ebenfalls über Etherbrücken.

Als Beispiele für besonders bevorzugte Lösungsmittel seien Ethylenglykol, Glycerin und Formamid genannt, wobei Ethylenglykol ganz besonders bevorzugt ist.

Die erfindungsgemäßen goniochromatischen Glanzpigmente sind durch thermische Behandlung mit dem polaren organischen Lösungsmittel erhältlich.

Üblicherweise wird dabei eine Supension der Pigmentteilchen in dem Lösungsmittel vorzugsweise unter Rühren auf 100°C bis zur jeweiligen Rückflußtemperatur erhitzt. Wird Ethylenglykol als Lösungsmittel verwendet, wird bevorzugt mindestens auf 150°C und besonders bevorzugt mindestens auf 180°C erhitzt.

In der Regel hat die Suspension einen Pigmentgehalt von etwa 1 bis 50 Gew.-%, insbesondere 10 bis 40 Gew.-%.

Im allgemeinen dauert die thermische Behandlung mit dem Lösungsmittel 0,5 bis 120 h, vorzugsweise 2 bis 12 h.

Besonders vorteilhafte Glanzpigmente werden durch zusätzliche Behandlung mit einem Silan erhalten. Selbstverständlich kann dabei auch eine Mischung verschiedener Silane verwendet werden.

Hierfür geeignet sind vor allem Silane, die 1 bis 3 hydrolysierbare Alkoxygruppen aufweisen und 1 bis 3 über ein Kohlenstoffatom an das Siliciumatom gebundene organische Reste, die funktionalisiert sein können, tragen.

Besonders geeignet sind daher Silane der allgemeinen Formel I

$$R_a SiX_b \qquad I$$

in der die Variablen folgende Bedeutung haben:

R    $C_1$-$C_{18}$-Alkylreste, die ein- oder mehrfach ungesättigt und/oder durch $C_1$-$C_6$-Alkanoloxy, Halogen, Amino und/oder gesättigtes oder ungesättigtes $C_1$-$C_6$-Alkoxy, das eine Epoxygruppe enthalten kann, substituiert sein können, wobei die Reste R für a > 1 gleich oder verschieden sein können;

X    $C_1$-$C_4$-Alkoxy, wobei die Reste X für b > 1 gleich oder verschieden sein können;

a    1, 2 oder 3;

b    1, 2 oder 3, wobei die Summe a + b = 4 ist.

Ganz besonders geeignet sind Silane der allgemeinen Formel Ia

$$R'SiX'_3 \qquad Ia$$

in der die Variablen folgende Bedeutung haben:

R'    Vinyl oder Propyl, das endständig durch gesättigtes oder ungesättigtes $C_2$-$C_4$-Alkoxy, das eine Epoxygruppe enthalten kann, substituiert sein kann;

X'    Methoxy oder Ethoxy.

Als Beispiele für geeignete Silane seien im einzelnen genannt: Dimethyldiethoxysilan, Trimethylethoxysilan, Propyltrimethoxysilan, Isobutyltrimethoxysilan, Octyltriethoxysilan, Hexadecyltriethoxysilan, Vinyltrimethoxysilan, Allyltrimethoxysilan, Vinyldimethylethoxysilan, Acetoxypropyltriethoxysilan, Trifluorpropyltrimethoxysilan, Aminopropyltriethoxysilan, 3-Methacryloxypropyltriethoxysilan, 3-Glycidyloxypropyltrimethoxysilan, 3-Glycidyloxypropylmethyldiethoxysilan und 3-Glycidyloxypropyldimethylethoxysilan, wobei 3-Glycidyloxypropyltrimethoxysilan, Vinyltrimethoxysilan, 3-Methacryloxypropyltrimethoxysilan und Propyltriethoxysilan bevorzugt sind.

Werden die erfindungsgemäßen goniochromatischen Glanzpigmente mit einem Silan behandelt, so werden im allgemeinen 0,1 bis 20 Gew.-%, vorzugsweise 1 bis 10 Gew.-%, Silan eingesetzt.

Das Silan kann dabei vor, während oder nach dem Erhitzen in dem polaren organischen Lösungsmittel zugegeben werden. Selbstverständlich kann das Silan auch portionsweise zu verschiedenen Zeiten zugesetzt werden.

Vorzugsweise unterzieht man die Pigmentteilchen zunächst einer thermischen Behandlung nur mit dem Lösungsmittel, gibt dann das Silan zu und erhitzt weitere 0,5 bis 12 h, insbesondere 1 bis 4 h, auf 50°C bis zur Rückflußtemperatur, bevorzugt auf mindestens 100°C und bei Verwendung von Ethylenglykol besonders bevorzugt auf mindestens 180°C.

Es kann vorteilhaft sein, vorhydrolysiertes Silan zu verwenden. Dazu wird das Silan vorab mit Wasser, einer wäßrigen anorganischen oder organischen Säure (z.B. Salzsäure, Salpetersäure, Phosphorsäure, Ameisensäure, Essigsäure) oder einer wäßrigen anorganischen Base (z.B. Ammoniak, Natriumhydroxid, Kaliumhydroxid, Natriumcarbonat) versetzt.

Es ist jedoch auch möglich, Silan und wäßrige Säure oder Base nacheinander zu der Pigmentsuspension zu geben.

Die Isolierung der entweder nur mit dem polaren organischen Lösungsmittel oder auch mit Silan behandelten Glanzpigmente erfolgt zweckmäßigerweise durch Filtration, wobei zunächst auf Raumtemperatur abgekühlt oder heiß, vorzugsweise bei 60 bis 130°C, filtriert werden kann. Üblicherweise wird das Pigment noch mit weiterem Lösungsmittel (z.B. Ethylenglykol) oder mit einem mit diesem Lösungsmittel mischbaren Lösungsmittel (z.B. Butylacetat, Propoxypropanol, Methylethylketon, Ethylenglykolmonobutylether, Diethylenglykolmonobutylether) gewaschen. Wird ein Lösungsmittel gewählt, in dem die Glanzpigmente später zum Einsatz kommen sollen, kann die erhaltene Pigmentpaste direkt oder nach Trocknung bei etwa 60 bis 150°C verwendet werden.

Die erfindungsgemäßen goniochromatischen Glanzpigmente eignen sich hervorragend zur Einfärbung der verschiedensten Anwendungsmedien, insbesondere von Lacken, Druckfarben, Tinten, Kunststoffen, Gläsern, keramischen Produkten und Zubereitungen der dekorativen Kosmetik.

Besondere Bedeutung haben sie für die Einfärbung von Pulverlacken und vor allem von Einbrennlacken, wie lösungsmittelhaltigen lowsolid-, medium-solid- und high-solid-Systemen und entsprechenden wasserbasierenden Systemen,die typischerweise bei 100 bis 200°C eingebrannt werden.

Sie zeichnen sich dabei durch eine gegenüber dem unbehandelten Pigment deutlich konstantere Koloristik, nämlich durch eine deutlich reduzierte Änderung der Koloristik und wesentlich schnelleres Erreichen eines stabilen Endzustands, aus.

Gewünschtenfalls können die erfindungsgemäßen goniochromatischen Glanzpigmente zusätzlich noch mit üblichen Pigmentadditiven belegt werden, um z.B. Dispergierung oder Ausrichtung im Anwendungsmedium, zu verbessern.

Beispiele

A) Herstellung von erfindungsgemäßen Glanzpigmenten

Beispiel 1

Eine Suspension von 300 g eines analog Beispiel 1 der EP-A-708 154 erhaltenen, mit Siliciumdioxid und Eisen(III)oxid beschichteten Aluminiumpigments (17 $\mu$m mittlerer Teilchendurchmesser der Aluminiumplättchen, 63 Gew.-% $SiO_2$, 10 Gew.-% $Fe_2O_3$) in 1,5 l Ethylenglykol wurde 4 h unter Rückfluß (191°C) erhitzt. Nach Abkühlen auf 110°C wurde das Pigment abfiltriert und mit weiterem Ethylenglykol gewaschen. Es wurde eine 72 gew.%ige Pigmentpaste erhalten.

Beispiel 2

Eine Suspension von 300 g des Glanzpigments aus Beispiel 1 in 1,5 l Ethylenglykol wurde 4 h unter Rückfluß erhitzt. Nach Zugabe von 16,5 g 3-Glycidyloxypropyltrimethoxysilan in 10 min wurde noch weitere 2 h unter Rückfluß (191°C) erhitzt. Nach Aufarbeitung wie in Beispiel 1 wurde eine 74 gew.-%ige Pigmentpaste erhalten.

Beispiel 3

Es wurde analog Beispiel 2 vorgegangen, jedoch wurden nur 8,3 g 3-Glycidyloxypropyltrimethoxysilan eingesetzt.

Beispiel 4

Es wurde analog Beispiel 2 vorgegangen, jedoch wurden nur 4,1 g 3-Glycidyloxypropyltrimethoxysilan eingesetzt.

Beispiel 5

Es wurde analog Beispiel 2 vorgegangen, jedoch wurden 17,4 g 3-Methacryloxypropyltriethoxysilan eingesetzt.

Beispiel 6

Es wurde analog Beispiel 2 vorgegangen, jedoch wurden 10,4 g Vinyltrimethoxysilan eingesetzt.

Beispiel 7

Es wurde analog Beispiel 2 vorgegangen, jedoch wurden 7,5 g Propyltriethoxysilan eingesetzt.

Beispiel 8

Es wurde analog Beispiel 2 vorgegangen, jedoch wurde jeweils nur auf 170°C erhitzt. Es wurde eine 72 gew.-%ige Pigmentpaste erhalten.

Beispiel 9

Es wurde analog Beispiel 2 vorgegangen, jedoch wurde die Pigmentpaste bei 100°C getrocknet.

Beispiel 10

Es wurde analog Beispiel 2 vorgegangen, jedoch wurde die Pigmentpaste bei 130°C getrocknet.

Beispiel 11

Eine Suspension von 300 g des Glanzpigments aus Beispiel 1 in 1,5 l Ethylenglykol wurde 4 h unter Rückfluß erhitzt. Nach Abkühlen der Suspension auf 120°C und Zugabe von 16,5 g 3-Glycidyloxypropyltrimethoxysilan in 10 min wurde noch weitere 2 h bei dieser Temperatur gerührt. Nach Aufarbeitung wie in Beispiel 1 wurde eine 72 gew.-%ige Pigmentpaste erhalten.

Beispiel 12

Es wurde analog Beispiel 2 vorgegangen, jedoch wurden nur 150 g Glanzpigment und 8,3 g durch Zugabe von 1 ml Wasser und 1 ml konz. Essigsäure 1 h vor der Verwendung vorhydrolysiertes 3-Glycidyloxypropyltrimethoxysilan eingesetzt. Es wurde eine 72 gew.-%ige Pigmentpaste erhalten.

Beispiel 13

Es wurde analog Beispiel 2 vorgegangen, jedoch wurden 300 g eines analog Beispiel 1 der EP-A-708 154 erhaltenen, mit Siliciumdioxid und Eisen(III)oxid beschichteten Aluminiumpigments (16 $\mu$m mittlerer Teilchendurchmesser der Aluminiumplättchen, 62 Gew.-% $SiO_2$, 14 Gew.-% $Fe_2O_3$) eingesetzt. Es wurde eine 70 gew.-%ige Pigmentpaste erhalten.

Beispiel 14

Es wurde analog Beispiel 13 vorgegangen, jedoch wurde zunächst 8 h und nach Zugabe des Silans weitere 6 h unter Rückfluß erhitzt. Es wurde eine 74 gew.-%ige Pigmentpaste erhalten.

B) Anwendung von erfindungsgemäßen Glanzpigmenten

Zur Beurteilung der Koloristik der erhaltenen Pigmente wurden jeweils 32 g Pigment in 768 g eines Wasserbasis-Einbrennlackes auf Acrylatbasis (20 Gew.-% Feststoffanteil) eingerührt und 30 min mit einem Propellerrührer bei 1700 U/min dispergiert. Die erhaltenen Lacke wurden dann in 6 Spritzgängen deckend auf ein schwarz/weiß lackiertes Aluminiumblech appliziert und nach 15minütigem Ablüften und Auftragen eines Wasserbasis-Einbrennklarlackes 30 min bei 130°C eingebrannt.

Die Messung der CIELAB-Farbwerte erfolgte mit einem Gonio-Spektralphotometer Multiflash (Fa. Optronik) bei einer Winkeldifferenz von 25° zum Glanzwinkel jeweils nach 0,5 h, nach 1 h und nach 24 h nach dem Einbrennvorgang. Dann wurde der Farbabstand dE* der Messung nach 1 h bzw. nach 24 h (Probe) gegenüber der Messung nach 0,5 h (Bezug) nach folgender Formel ermittelt:

$$dE^* = [(dL^*)^2 + (da^*)^2 + (db^*)^2]^{1/2}$$

Dabei bedeuten:

dL* = $L^*_p$ - $L^*_b$ : Helligkeitsabstand der Probe zum Bezug
da* = $a^*_p$ - $a^*_b$ : Rot-Grün-Abstand der Probe zum Bezug
db* = $b^*_p$ - $b^*_b$ : Gelb-Blau-Abstand der Probe zum Bezug

Der Farbabstand dE* ist ein Maß für die Größe des Unterschieds zwischen einer Probe und einem Bezug bezüglich Buntheit, Buntton und Helligkeit. Je kleiner der dE*-Wert ist, umso mehr stimmt die Koloristik von Probe und Bezug überein.

Die erhaltenen Ergebnisse sind in der folgenden Tabelle zusammengestellt, wobei zum Vergleich die jeweiligen unbehandelten Pigmente (V1 und V13) mitaufgeführt sind.

Tabelle

| Glanzpigment aus Beispiel | dE* nach 1 h | dE* nach 24 h |
|---|---|---|
| V1 | 0,8 | 6,5 |
| 1 | 0,4 | 1,8 |
| 2 | 0,2 | 0,9 |
| 3 | 0,2 | 1,5 |
| 4 | 0,3 | 1,6 |
| 5 | 1,4 | 2, 6 |
| 6 | 0,8 | 1,5 |
| 7 | 1,8 | 2,7 |
| 8 | 1,6 | 2,4 |
| 9 | 1,3 | 2,2 |
| 10 | 1,8 | 2,5 |
| 11 | 0,6 | 2,1 |
| 12 | 0,6 | 2,1 |
| V13 | 0,9 | 6,8 |
| 13 | 0,9 | 0,9 |
| 14 | 1,1 | 1,1 |

**Patentansprüche**

1.  Goniochromatische Glanzpigmente, die mindestens eine dielektrische, niedrigbrechende, Interferenzfarben zeigende Schicht aufweisen, in die ein polares organisches Lösungsmittel eingelagert ist, das über Hydroxyl- oder Amidgruppen mit dem schichtmaterial wechselwirken kann.

**2.** Goniochromatische Glanzpigmente nach Anspruch 1, die mindestens eine dielektrische, niedrigbrechende, Interferenzfarben zeigende Schicht aufweisen und einer thermischen Behandlung in dem polaren organischen Lösungsmittel unterzogen worden sind.

**3.** Glanzpigmente nach Anspruch 1 oder 2, bei denen als organisches Lösungsmittel Ethylenglykol eingesetzt worden ist.

**4.** Glanzpigmente nach den Ansprüchen 1 bis 3, die zusätzlich mit einem Silan behandelt worden sind.

**5.** Glanzpigmente nach Anspruch 4, die mit einem Silan der allgemeinen Formel I

$$R_aSiX_b \qquad I$$

in der die Variablen folgende Bedeutung haben:

R $C_1$-$C_{18}$-Alkylreste, die ein- oder mehrfach ungesättigt und/oder durch $C_1$-$C_6$-Alkanaloxy, Halogen, Amino und/oder gesättigtes oder ungesättigtes $C_1$-$C_6$-Alkoxy, das eine Epoxygruppe enthalten kann, substituiert sein können, wobei die Reste R für a > 1 gleich oder verschieden sein können;
X $C_1$-$C_4$-Alkoxy, wobei die Reste X für b > 1 gleich oder verschieden sein können;
a 1, 2 oder 3;
b 1, 2 oder 3, wobei die Summe a + b = 4 ist,

behandelt worden sind.

**6.** Glanzpigmente nach Anspruch 4 oder 5, die zusätzlich mit einem Silan der allgemeinen Formel Ia

$$R'SiX'_3 \qquad Ia$$

in der die variablen folgende Bedeutung haben:

R' Vinyl oder Propyl, das endständig durch gesättigtes oder ungesättigtes $C_2$-$C_4$-Alkoxy, das eine Epoxygruppe enthalten kann, substituiert sein kann;
X' Methoxy oder Ethoxy,

behandelt worden sind.

**7.** Verfahren zur Herstellung von Glanzpigmenten gemäß den Ansprüchen 1 bis 3, **dadurch gekennzeichnet, daß** man die Pigmentteilchen in dem organischen Lösungsmittel auf eine Temperatur ≥ 100°C erhitzt.

**8.** verfahren zur Herstellung von Glanzpigmenten gemäß den Ansprüchen 4 bis 6, **dadurch gekennzeichnet, daß** man vor, während und/oder nach dem Erhitzen das Silan zugibt.

**9.** Verwendung von Glanzpigmenten gemäß den Ansprüchen 1 bis 6 zur Einfärbung von Lacken, Druckfarben. Tinten, Kunststoffen, Gläsern, keramischen Produkten und Zubereitungen der dekorativen Kosmetik.

**10.** Verwendung von Glanzpigmenten gemäß den Ansprüchen 1 bis 6 zur Einfärbung von Einbrennlacken und Pulverlacken.

**Claims**

**1.** Goniochromatic luster pigments comprising at least one dielectric low-refractive interference-colored layer which includes a polar organic solvent which can interact with the layer material via hydroxyl or amide groups.

**2.** Goniochromatic luster pigments according to claim 1 and comprising at least one dielectric low-refractive interference-colored layer which have been subjected to a thermal treatment in the polar organic solvent.

**3.** Luster pigments according to claim 1 or 2, wherein the organic solvent is ethylene glycol.

4. Luster pigments according to any of claims 1 to 3, which have additionally been treated with a silane.

5. Luster pigments according to claim 4, which have been treated with a silane of the general formula I

$$R_aSiX_b \qquad I$$

where:

R represents $C_1$-$C_{18}$-alkyl radicals which may be singly or multiply unsaturated and/or substituted by $C_1$-$C_6$-alkanoloxy, halogen, amino and/or saturated or unsaturated $C_1$-$C_6$-alkoxy which may comprise an epoxy group, and each R is the same or different for a > 1;
X is $C_1$-$C_4$-alkoxy and each X may be the same or different for b > 1;
a is 1, 2 or 3;
b is 1, 2 or 3, with the proviso that the sum a + b = 4.

6. Luster pigments according to claim 4 or 5, which have additionally been treated with a silane of the general formula Ia

$$R'SiX'_3 \qquad Ia$$

where:

R' is vinyl or propyl which may be substituted in the terminal position by saturated or unsaturated $C_2$-$C_4$-alkoxy which may comprise an epoxy group; and
X' is methoxy or ethoxy.

7. A process for preparing luster pigments according to any of claims 1 to 3, which comprises heating the pigment particles in the organic solvent to a temperature $\geq$ 100°C.

8. A process for preparing luster pigments according to any of claims 4 to 6, which comprises adding the silane before, during and/or after the heating.

9. The use of luster pigments according to any of claims 1 to 6 for coloring coatings, inks, including printing inks, plastics, glasses, ceramic products and decorative cosmetic preparations.

10. The use of luster pigments according to any of claims 1 to 6 for coloring baking finishes and powder coatings.


**Revendications**

1. Pigments brillants goniochromatiques, qui présentent au moins une couche diélectrique, faiblement réfringente, qui montre des couleurs d'interférence et dans laquelle est incorporé un solvant organique polaire qui peut interagir avec la matière de couche par l'intermédiaire de groupés hydroxyle ou amide.

2. Pigments brillants goniochromatiques suivant la revendication 1, qui présentent au moins une couche diélectrique, faiblement réfringente, montrant des couleurs d'interférence et ont été soumis à un traitement thermique dans le solvant organique polaire.

3. Pigments brillants suivant la revendication 1 ou 2, dans lesquels on a mis en oeuvre de l'éthylèneglycol comme solvant organique.

4. Pigments brillants suivant les revendications 1 à 3, qui ont été traités en supplément par un silane.

5. Pigments brillants suivant la revendication 4, qui ont été traités par un silane de la formule générale I :

$$R_aSiX_b \qquad I$$

dans laquelle les variables ont la signification suivante :

R représente des radicaux alkyle $C_1$-$C_{18}$ qui peuvent être insaturés à une ou plusieurs reprises et/ou être substitués par de l'halogène ou un groupe alcanoloxy en $C_1$-$C_6$, amino et/ou alcoxy en $C_1$-$C_6$ saturé ou insaturé qui peut contenir un groupe époxy, les radicaux R pouvant être identiques ou différents dans le cas où a > 1, X représente un groupe alcoxy en $C_1$-$C_4$, les radicaux X pouvant être identiques ou différents dans le cas où b > 1, a vaut 1, 2 ou 3,
b vaut 1, 2 ou 3, la somme de a + b = 4.

6. Pigments brillants suivant la revendication 4 ou 5, qui ont été traités en supplément par un silane de la formule générale Ia :

$$R'SiX'_3 \qquad Ia$$

dans laquelle les variables ont la signification suivante :

R' représente un groupe vinyle ou propyle qui peut être substitué en fin de chaîne par un groupe alcoxy en $C_2$-$C_4$ saturé ou insaturé qui peut contenir un groupe époxy,
X' représente un groupe méthoxy ou éthoxy.

7. Procédés de préparation de pigments brillants suivant les revendications 1 à 3, **caractérisé en ce qu'**on chauffe les particules de pigment dans le solvant organique à une température ≥ 100°C.

8. Procédé de préparation de pigments brillants suivant les revendications 4 à 6, **caractérisé en ce qu'**on ajoute le silane avant, pendant et/ou après le chauffage.

9. Utilisation de pigments brillants suivant les revendications 1 à 6, pour colorer des vernis, des encres d'imprimerie, des encres, des substances synthétiques, des verres, des produits céramiques et des compositions de la cosmétique décorative.

10. Utilisation de pigments brillants suivant les revendications 1 à 6 pour colorer des vernis à cuire et des vernis en poudre.